# FASCICULE DE BREVET EUROPEEN

(11) **EP 0 342 079 B1**
(45) Date de publication et mention de la délivrance du brevet: **17.03.1993**
(21) Numéro de dépôt: 89401131.1
(22) Date de dépôt: 21.04.1989
(51) Int. Cl.: H02G 3/08

(54) **Boîtier de distribution perfectionné pour installation électrique**
Verteilungskasten für Elektroinstallationen
Distribution box for electrical installation

(30) Priorité: 11.05.1988 FR 8806387
(43) Date de publication de la demande: 15.11.1989
(73) Titulaire: SAREL APPAREILLAGE ELECTRIQUE Société anonyme, F-67260 Sarre Union (FR)
(72) Inventeur: Buchy, Bernard, F-67320 Schoenbourg (FR); Dionisi, Jacques, F-67700 Saverne (FR)
(74) Mandataire: Lerner, François

(56) Documents cités:
- BE-A- 424 736
- FR-A- 877 142

## Description

L'invention se rapporte à un boîtier de distribution pour des installations électriques et électroniques, telles qu'un boîtier "à bornes" pouvant contenir des bornes de connexion ou de raccordement pour la liaison de câbles électriques.

Au brevet FR-A-887 142, un boîtier de ce type est d'ailleurs décrit, comprenant une paroi de fond et une paroi de dessus entre lesquelles s'étendent et auxquelles sont fixées de façon amovible des parois latérales de fermeture présentant une face interne dirigée vers l'intérieur du boîtier et une face externe opposée, des orifices étant ménagés dans ces parois pour le passage des câbles électriques, certaines au moins desdites parois latérales se prolongeant angulairement, dans les coins correspondant du boîtier et suivant deux de ses côtés opposés, par des amorces de parois où sont ménagées des rainures sensiblement perpendiculaires auxdites parois de fond et de dessus pour recevoir des tenons formés dans au moins une paroi latérale restante du boîtier.

Compte tenu de leur conception, de tels boîtiers présentent certains inconvénients et en particulier :
a) Leur accès interne est malaisé, le raccordement des câbles électriques étant délicat, notamment lorsque leur diamètre est important ce qui les rend rigides et donc peu manoeuvrables.
b) Même lorsque les boîtiers sont constitués en plusieurs pièces séparables, ils n'évitent pas en pratique à l'opérateur d'avoir à jouer sur la flexibilité parfois très relative des câbles pour en mener à bien les branchements.
c) L'étanchéité d'ensemble du boîtier s'obtient habituellement par l'emploi d'un certain nombre de joints ou de cordons souples d'étanchéité. Or, ces joints se dégradent d'autant plus vite que les ouvertures et fermetures des boîtiers sont plus fréquentes.
d) Les pièces constitutives des boîtiers sont peu standardisées, entraînant des frais.

Pour résoudre ces différents problèmes, l'invention propose un boîtier perfectionné du type susmentionné qui se caractérise en ce que les rainures des amorces de parois sont ménagées dans la face externe de ces dernières, tandis que les tenons sont formés dans la face interne de la (des) dite(s) paroi(s) latérale(s) restante(s), ces rainures et ces tenons présentant des rampes latérales de coulissement orientées suivant des directions (X₁, X₂) concourantes dans le sens de l'engagement des tenons dans les rainures, raccourcissant ainsi la longueur de coulissement des premiers dans les secondes nécessaire à l'engagement en verrouillage, respectivement au dégagement, desdites parois équipées de ces tenons.

De cette façon, l'étanchéité latérale du boîtier pourra être assurée sans nécessiter la prévision de joints et autres cordons, et les opérations de connexion électriques des câbles seront facilitées.

Pour éclairer cet avantage spécifique offert par l'invention, prenons par exemple le cas d'un boîtier fermé, sur lequel on doit modifier un branchement électrique. Avec le boîtier de l'invention, il suffira, après avoir retiré la paroi de dessus, de dégager légèrement l'une au moins des parois latérales, en la faisant coulisser sur une longueur juste suffisante pour rompre le verrouillage d'engagement à fond de rainures de ses tenons, puis d'écarter cette paroi (qui ne sera alors plus retenue,sur le boîtier) pour pouvoir accéder librement à l'intérieur de ce dernier, sans avoir eu à "jouer" sur la flexibilité souvent toute relative des câbles".

Bien entendu en fin d'intervention, le nouveau montage sur le boîtier de la paroi que l'on a retirée s'effectuera aussi aisément, par la séquence inverse des opérations.

Avant de décrire plus en détails l'invention faite en référence aux dessins annexés, on notera encore que, selon une caractéristique complémentaire de l'invention, légèrement avant leurs extrémités respectivement proches des parois de fond et de dessus, les parois et amorces de parois latérales présente chacune, sur leur face extérieure, un épaulement formant rebord qui, dans l'état fermé du boîtier, s'étend sur toute la périphérie de ce dernier en allant en s'élargissant vers ses angles extérieurs, chacun desdits rebords recevant étroitement, en appui sur lui, une bordure périmétrique des parois respectivement de fond et de dessus.

Dans les dessins annexés donnés à titre d'exemple:
- la figure 1 est une vue schématique en perspective et en vue éclatée des différentes pièces et éléments constitutifs du boîtier de l'invention,
- la figure 2 est une vue agrandie du détail repéré 11 à la figure 1,
- et la figure 3 est une vue locale du boîtier dans l'état engagé à fond de rainures de ses parois de côtés, dans le sens de la flèche III de la figure 1.

Si l'on se reporte aux dessins, on voit illustré un mode de réalisation du boîtier 1 de l'invention de forme générale parallélépipédique rectangle et qui comprend une paroi de fond 2, une paroi de dessus 3 et des panneaux de côtés comportant quatre parois latérales 4, 5, 6, 7 de fermeture du boîtier.

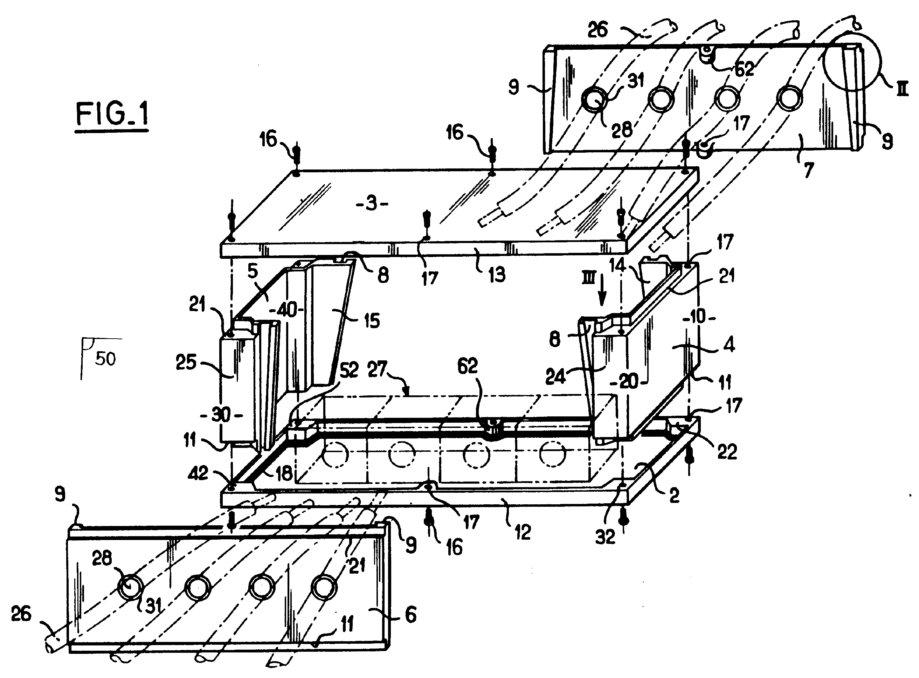

Tel qu'illustrées, les parois de fond 2 et de dessus 3 sont identiques et comportent chacune un bord tombé périphérique respectivement 12, 13, formant rebord périmétrique. On notera que ce rebord s'élargit (repères 22, 32, 42, et 52 de la figure 1, pour le fond 2) vers les quatre angles extérieurs des parois et en quelques points formant localement des bourrelets, tels que 62 pour le fond 2, au niveau desquels on prévoit d'assurer la fixation des fonds et dessus en question aux parois latérales.

Figure 1, on voit également que deux des panneaux de côtés 4, 5 se faisant face sont conformés de manière à se prolonger latéralement sensiblement à angle droit, au-delà des angles extérieurs 10, 20, 30, 40 du boîtier, par des amorces de parois, respectivement 14, 24, et 15, 25. Comme illustré, ces amorces de parois portent chacune vers leur extrémité latérale libre une rainure 8 dirigée sensiblement perpendiculairement au fond 2 et au dessus 3, en l'état fermé du boîtier, et qui s'ouvre vers l'extérieur dudit boîtier, c'est-à-dire sensiblement perpendiculairement au plan général dans lequel s'étend l'amorce de paroi qui porte la rainure (voir plan 50 figure 1, pour les rainures de la face avant).

De préférence, les rainures 8 seront ménagées sur toute la hauteur des parois correspondantes du boîtier.

Dans ces rainures viennent s'engager des tenons saillants 9 qui sont formés vers les extrémités latérales opposés des panneaux 6, 7, lesquels ne présentent, tels qu'illustrés figure 1, sous l'aspect de plaques de forme générale plane propres à venir s'engager entre les amorces de parois 14, 15, et 24, 25 respectivement. En position de présentation (voir figure 1), les tenons 9 s'étendront donc en direction de l'intérieur du boîtier.

De manière qu'on puisse engager ou dégager les tenons 9 dans ou hors des rainures 8, sans nécéssiter un coulissement des premiers dans les secondes sur toute leur longueur, on prévoit selon l'invention de conformer lesdites rainures 8 et les tenons 9 complémentaires de manière que leurs rampes latérales de coulissement soient orientées suivant des directions concourantes allant en se rapprochant dans le sens de l'engagement des tenons dans les rainures.

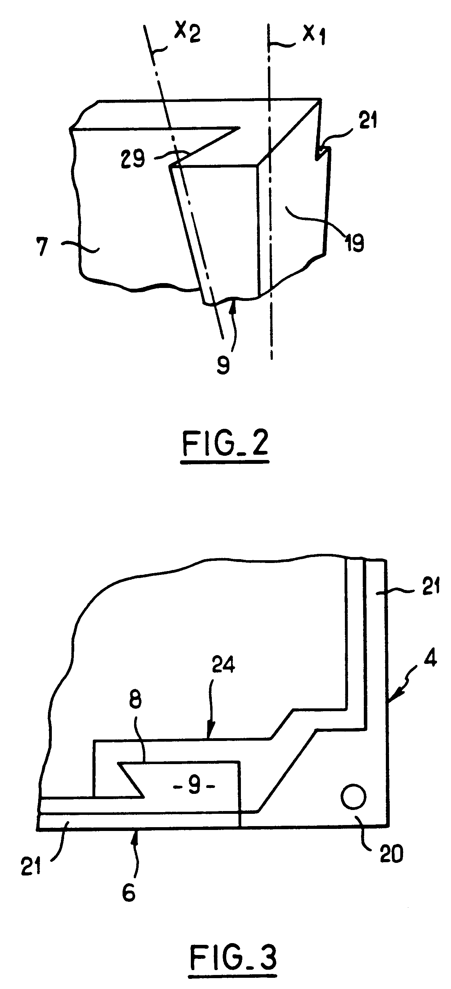

Figure 2, on a d'ailleurs représenté une vue agrandie de l'un des deux tenons 9 d'une des parois latérales qui en est équipée. Sur cette figure, on voit clairement que les rampes latérales 19, 29 du tenon 9 illustré vont en se rapprochant dans le sens d'engagement de ce tenon, suivant des directions X1 et X2 concourantes.

On comprend qu'il en est de même pour les rainures 8.

S'il on se reporte maintenant à la figure 3 qui est une vue locale de dessus du boîtier, au niveau de son angle extérieur 20, paroi de dessus 3 enlevée, on voit que les rainures 8 et les tenons 9 auront de préférence et en section droite, une forme de trapèze qui améliorera le verrouillage étanche en engagement à fond de rainures des panneaux latéraux du boîtier.

De l'étude des figures 1 et 3 il ressort en outre que les parois 4, 5, 6, 7 et amorces de parois 14, 24, 15, 25 latérales présentent chacune sur leur face extérieure et légèrement en retrait de leur bordures d'extrémités supérieure et inférieure proches respectivement des parois de fond 2 et de dessus 3, un épaulement répéré 11 ou 21.

En fait, ces épaulements 11, 21 forment un rebord continu qui s'étend sur toute la périphérie du boîtier dans l'état fermé de ce dernier, une fois toutes ses parois engagées en verrouillage ou fixées les unes aux autres.

Comme on le voit clairement sur les figures, les rebords périphériques des panneaux latéraux du boîtier vont localement en s'élargissant vers les angles extérieurs de ce dernier, de manière à pouvoir recevoir en appui sur eux la bordure périmétrique complémentaire des parois de fond 2 et de dessus 3 avec leurs renforts d'angles.

Des vis 16 ou des moyens analogues de fixation assureront au niveau des bordures d'angles élargies et des bourrelets locaux du boîtier, la liaison entre les panneaux latéraux 4, 5, 6, 7 et les parois respectivement de fond 2 et de dessus 3,à travers des orifices 17 prévus à cet effet. Et une bande ou un cordon souple 18 d'étanchéité disposé sur la périphérie intérieure des parois de fond 2 et de dessus 3 et contre lequel viendra porter étroitement la bordure inférieure ou supérieure des panneaux latéraux, une fois le boîtier fermé, assurera à ce niveau son montage en étanchéité.

Le boîtier de l'invention étant destiné, comme on l'a dit, à recevoir intérieurement des bornes pour la liaison de câbles électriques, on a également représenté figure 1,en traits fantômes, une série de bornes de connexion 27 auxquelles peut être fixée l'extrémité dénudée de câbles électriques 26 après que ceux-ci aient traversé des orifices 28 de passage ménagés à cet effet dans les parois latérales 6, 7 du boîtier. En pratique ces orifices de passages seront équipés d'anneaux d'étanchéité 31 formant serre-câbles, de manière à assurer le maintien de ces derniers, et les bornes de connexion 27 seront fixées côte-à-côte, par vissage, collage ou analogue, à la face de la paroi de fond 2 dirigée vers l'intérieur du boîtier.

Pour mettre clairement en lumière les avantages offerts par le boîtier de l'invention, on va maintenant décrire brièvement les opérations que devrait effectuer un opérateur qui désirerait modifier le branchement des câbles.

Considérons ce boîtier dans son état fermé, avec ses parois de fond 2 et de dessus 3 fixées étroitement en étanchéité à ses parois latérales,elles- mêmes inter-engagées en verrouillage étanche, à fond de rainures.

L'extrémité dénudée des câbles électriques 26 est alors maintenue serrée dans les ouvertures de réception des bornes de connexion 27.

Pour intervenir sur le boîtier, l'opérateur va tout d'abord retirer le panneau de dessus 3 et éventuellement les vis 16 qui relient à la paroi de fond 2 les parois latérales 6, 7 équipées des tenons 9,de manière à permettre le coulissement en dégagement de ces parois.

De préférence les serre-fils 31 ont été desserrés.

L'opérateur fait alors légèrement coulisser les parois 6, 7 en question dans l'axe des glissières, de manière à obtenir un décalage suffisant pour pouvoir dégager lesdites parois qu'il fait alors glisser à l'écart du boîtier, le long des câbles électriques 26.

Il peut alors modifier les branchements sans gêne. Si nécessaire, l'opérateur a même encore la possibilité de retirer, par simple dévissage, les parois complémentaires 4, 5 et ainsi obtenir un accès total aux bornes de connexion 27.

Une fois les câbles correctement raccordés, il suffit à l'opérateur de rapprocher du boîtier les parois 6, 7 qu'il a retirées, en les faisant glisser le long des câbles 26, de manière à présenter à nouveau avec un léger décalage les tenons 9 de ces parois en regard des rainures 8 de réception.

Par un mouvement d'appui en engagement des tenons dans les rainures, suivi d'une poussée en coulissement en direction de la paroi de fond 2, les panneaux 6, 7 de côté viennent alors s'encastrer de façon étanche à fond de rainures, chacun entre les amorces de parois latérales correspondantes du boîtier.

Il ne reste plus alors à l'opérateur qu'à serrer les serre-câbles 31, de manière à fixer en étanchéité la position des câbles électriques 26, et de remettre en place le dessus 3.

Bien entendu, l'invention ne se limite pas strictement au mode de réalisation qui a été plus particulièrement envisagé et qui vient d'être décrit.

En particulier, on aurait pu prévoir (variante non représentée) un boîtier comprenant quatre cornières ou piliers d'angles identiques portant chacun deux rainures latérales d'engagement, ouvertes donc deux à deux vers l'extérieur sur chacun des côtés du boîtier dont les quatre parois latérales de fermeture seraient alors identiques et conformées, telles que les panneaux 6, 7 de la version de la figure 1, sous l'aspect de plaques planes équipées, vers leurs extrémités, de tenons à rampes orientées selon des directions concourantes et à section en trapèze complémentaire de celle des rainures. Dans sa définition générale à quatre piliers d'angles, un tel boîtier s'apparentrait à celui divulgué au brevet BE-A-424 736.

## Revendications

1. Boîtier destiné en particulier à recevoir intérieurement des bornes de connexion pour la liaison de câbles électriques, comprenant une paroi de fond (2) et une paroi de dessus (3) entre lesquelles s'étendent et auxquelles sont fixées de façon amovible des parois latérales (4, 5, 6, 7) de fermeture présentant une face interne dirigée vers l'intérieur du boîtier et une face externe opposée, des orifices (28) étant ménagés dans ces parois pour le passage des câbles électriques (26), certaines au moins desdites parois latérales (4, 5) se prolongeant angulairement, dans les coins correspondant du boîtier et suivant deux de ses côtés opposés, par des amorces de parois (14, 24 ; 15, 25) où sont ménagées des rainures (8) sensiblement perpendiculaires auxdites parois de fond (2) et de dessus (3) pour recevoir des tenons (9) formés dans au moins une paroi latérale (6, 7) restante du boîtier, caractérisé en ce que les rainures (8) des amorces de parois sont ménagées dans la face externe de ces dernières, tandis que les tenons (9) sont formés dans la face interne de la (des) dite(s) paroi(s) latérale(s) restante(s) (6, 7), ces rainures et ces tenons présentant des rampes latérales (19, 29) de coulissement orientées suivant des directions (X₁, X₂) concourantes dans le sens de l'engagement des tenons dans les rainures, raccourcissant ainsi la longueur de coulissement des premiers dans les secondes nécessaire à l'engagement en verrouillage, respectivement au dégagement, desdites parois équipées de ces tenons.

2. Boîtier selon la revendication 1 caractérisé en ce que les rainures (8) et les tenons (9) ont, en section, une forme de trapèze.

3. Boîtier selon l'une quelconque des revendications précédentes caractérisé en ce que, légèrement avant leurs extrémités respectivement proches des parois de fond (2) et de dessus (3), les parois et amorces de parois latérales présentent chacune, sur leur face extérieure, un épaulement (11, 21) formant rebord qui, dans l'état fermé du boîtier, s'étend sur toute la périphérie de ce dernier en allant en s'élargissant vers ses angles extérieurs, chacun desdits rebords recevant étroitement, en appui sur lui, une bordure périmétrique des parois respectivement de fond (2) et de dessus (3).

4. Boîtier selon l'une quelconque des revendications précédentes caractérisé en ce que les parois respectivement de fond (2) et de dessus (3) sont identiques et comportent intérieurement, sur leur périphérie, un cordon (18) souple d'étanchéité contre lequel viennent porter étroitement les bordures respectivement inférieure et supérieure des parois (4, 5, 6, 7) et amorces de parois (14, 24, 15, 25) latérales précitées, dans l'état fermé du boîtier.

5. Boîtier selon l'une quelconque des revendications précédentes caractérisé en ce que les orifices (28) pour le passage des câbles sont ménagés dans certaines au moins desdites parois latérales (6, 7) équipées de tenons.

6. Boîtier selon l'une quelconque des revendications précédentes caractérisé en ce que des anneaux (31) d'étanchéité à travers lesquels passent les câbles électriques (26) sont prévus à l'endroit desdits orifices (28) pour le passage des câbles.

## Patentansprüche

1. Kasten, der insbesondere zur Aufnahme von Anschlußklemmen zur Verbindung elektrischer Kabel in seinem Inneren bestimmt ist, umfassend eine Bodenwand (2) und eine Oberwand (3), zwischen denen sich seitliche Abschlußwände (4,5,6,7), die eine ins Innere des Kastens gerichtete Innenfläche und eine entgegengesetzte Außenfläche bilden, erstrecken und an denen sie lösbar befestigt sind, wobei in diesen Wänden Öffnungen (28) zum Durchtritt elektrischer Kabel (26) ausgebildet sind und wenigstens bestimmte jener Seitenwände (4,5) abgewinkelt in korrespondierenden Ecken des Kastens, und zwei jener gegenüberliegenden Seiten folgend, durch Wandansätze (14,24; 15,25) verlängert sind, in denen zu Boden- und Oberwand (2 bzw. 3) im wesentlichen senkrechte Nuten (8) zur Aufnahme von Zapfen (9) angeordnet sind, die in mindestens einer verbleibenden Seitenwand (6,7) des Kastens gebildet sind, dadurch gekennzeichnet, daß die Nuten (8) der Wandansätze in der Außenfläche letzterer angeordnet sind, während die Zapfen (9) in der Innenfläche der verbleibenden Seitenwand (-wände) (6,7) ausgebildet sind, wobei diese Nuten und Zapfen seitliche Gleitrampen (19,29) bilden, die entsprechend sich kreuzenden Richtungen (X1,X2) im Sinne des Eingriffs der Zapfen in die Nuten orientiert sind, wobei so die Gleitlänge ersterer in den zweiten verkürzt wird, die für den klemmenden Eingriff bzw. das Lösen der mit diesen Zapfen ausgestatteten Wände erforderlich ist.

2. Kasten nach Anspruch 1, dadurch gekennzeichnet, daß die Nuten (8) und die Zapfen (9) im Querschnitt trapezförmig sind.

3. Kasten nach einem der vorhergehenden Ansprüche, dadurch gekennzeichnet, daß geringfügig vor ihren jeweils der Boden- und Oberwand (2 bzw. 3) nahen Enden die Wände und die seitlichen Wandansätze jeweils an ihrer Außenfläche eine einen Ansatz bildende Schulter (11,21) aufweisen, der sich im geschlossenen Zustand des Kastens über den gesamten Umfang des letzteren erstreckt, wobei er zu seinen äußeren Ecken hin größer wird, und wobei jeder dieser Ansätze genau in Abstützung darauf einen Begrenzungsrand der Boden- bzw. Oberwand (2 bzw. 3) aufnimmt.

4. Kasten nach einem der vorhergehenden Ansprüche, dadurch gekennzeichnet, daß die Boden- bzw. Oberwand (2 bzw. 3) identisch sind und im Inneren an ihrer Peripherie eine elastische Dichtungsschnur (18) aufweisen, gegen die die Unter- bzw. Oberränder der vorerwähnten seitlichen Wände (4,5,6,7) und Wandansätze ( 14,24,15,25) im geschlossenen Zustand des Kastens eng anliegen können.

5. Kasten nach einem der vorhergehenden Ansprüche, dadurch gekennzeichnet, daß die Öffnungen (28) zum Durchtritt der Kabel in wenigstens bestimmten der genannten Seitenwände (6,7), die mit Zapfen ausgebildet sind, angeordnet sind.

6. Kasten nach einem der vorhergehenden Ansprüche, dadurch gekennzeichnet, daß an den Stellen der Öffnungen (28) für den Durchtritt der Kabel Dichtungsringe (31) vorgesehen sind, durch die die elektrischen Kabel (26) hindurchtreten.

## Claims

1. Case intended in particular to accommodate internally connected terminals for connecting electrical cables, comprising a base wall (2) and a top wall (3) between which there extend, and to which there are displaceably attached lateral closing walls (4, 5, 6, 7) which have an inner surface facing the inside of the case and an opposite outer surface, apertures (28) being provided in these walls for the passage of electrical cables (26), some at least of these side walls (4, 5) being extended angularly in the corresponding corners of the case and along two of the opposite sides by initial wall sections (14, 24; 15, 25) in which there are provided grooves (8) which are substantially perpendicular to the said base wall (2) and top wall (3) in order to receive lugs (9) formed in at least one residual lateral wall (6, 7) of the case, characterised in that the grooves (8) of the inital wall sections are provided in the outer surface of the latter, whereas the lugs (9) are formed in the inner surface of the residual lateral wall or walls (6, 7), these grooves and lugs having lateral slide slopes (19, 29) facing in the directions (X₁, X₂), which converge in the direction of engagement of the lugs in the grooves, thus shortening the sliding length of the former in the latter, necessary for both the locking and release of the said walls provided with these lugs.

2. Case according to Claim 1, characterised in that the grooves (8) and the lugs (9) have a trapezoidal cross-section.

3. Case according to either of the preceding Claims characterised in that slightly in front of their ends or close to the base wall (2) and top wall (3), the walls and initial wall sections each have on their outer surface a shoulder (11, 21) forming an edge which, when the case is closed, extends along the entire periphery of the latter and widens towards the outer corners thereof, each of the said edges supporting thereon a close-fitting perimeter edging of the base wall (2) and the top wall (3).

4. Case according to any one of the preceding Claims, characterised in that the base wall (2) and the top wall (3) are identical and on their inner periphery there is disposed a resilient sealing cord (18) against which there abut closely the aforementioned lower and upper edges of the walls (4, 5, 6, 7) and initial wall sections (14, 24, 15, 25) when the case is closed.

5. Case according to any one of the preceding Claims, characterised in that the apertures (28) for the passage of the cables are provided in some at least of the said lateral walls (6, 7) provided with lugs.

6. Case according to any one of the preceding Claims, characterised in that sealing rings (31) through which the electrical cables (26) pass are provided in the position of the said apertures (28) for the passage of the cables.
